# DEMANDE DE BREVET EUROPEEN

(11) **EP 1 325 838 A1**
(43) Date de publication de la demande: **09.07.2003**
(21) Numéro de dépôt: 02293029.1
(22) Date de dépôt: 06.12.2002
(51) Int. Cl.: B60N 2/72, B60N 2/70

(54) **Siège en mousse à revêtement amovible, notamment pour véhicule automobile**

(30) Priorité: 21.12.2001 FR 0116737
(71) Demandeur: Centre d'Etude et de Recherche pour l'Automobile ( CERA), 51100 Reims (FR)
(72) Inventeur: Georges, Laurent, 51100 Reims (FR); Patte, Damien, 51490 Epoye (FR)
(74) Mandataire: Geismar, Thierry

(57) **Abrégé**

L'invention a pour objet un siège en mousse (1) comprenant une assise (2) et un dossier (3), au moins une partie de la surface dudit siège (1) comprenant un premier type de zones (4) pourvu d'un premier revêtement (5) et un deuxième type de zones (6) non destiné à être pourvu dudit revêtement (5), ledit siège (1) étant caractérisé en ce qu'une gorge (10) est prévue à la périphérie de chaque zone (6) du deuxième type, ladite gorge (10) étant pourvue de moyens d'association réversible (11) d'un deuxième revêtement (7) destiné à recouvrir de façon amovible la surface de la zone (6) de deuxième type.

L'invention concerne également un revêtement amovible pour un tel siège, ainsi qu'un ensemble siège-revêtement amovible, et le procédé de réalisation d'un tel siège.

## Description

L'invention concerne un siège en mousse comprenant une assise et un dossier, ainsi qu'un revêtement amovible pour un tel siège, un ensemble comprenant ledit siège et au moins un tel revêtement, et le procédé de fabrication d'un tel siège.

Les sièges en mousse selon l'invention sont plus particulièrement destinés aux véhicules automobiles.

Pour des raisons esthétiques, de tels sièges sont pourvus d'un revêtement, par exemple formé d'une couche de textile, de cuir ou analogue.

De tels revêtements sont disposés sur la surface de la mousse, lors de la fabrication du siège. De ce fait, il n'est pas possible de personnaliser le siège en adaptant le revêtement aux souhaits de l'utilisateur, sauf à fabriquer une large variété de sièges, ce qui est incompatible avec les coûts et cadences en vigueur dans l'industrie automobile.

Pour résoudre ce problème, on connaît, notamment du document FR-2 794 696, des sièges de véhicule automobile comprenant des coussins d'assise amovibles, dans lesquels l'assise comprend un logement apte à recevoir et maintenir par encastrement un coussin d'assise. Suivant cette invention, plusieurs types de coussins d'assise peuvent être reçus dans un même siège. Ainsi, lors de l'achat du véhicule, l'acquéreur a le choix entre plusieurs coussins d'assise, par exemple de revêtements différents. Par conséquent, cette solution permet, en ne fabriquant que des coussins spécifiques et en les combinant avec un même type de siège, de proposer un grand nombre de possibilités. Ainsi, les coussins d'assise peuvent être livrés séparément au concessionnaire, celui-ci pouvant monter, à la demande, le coussin voulu sur le siège de la voiture achetée.

Une telle solution présente l'inconvénient de nécessiter, en outre de celle du siège, la fabrication d'un autre élément en mousse revêtu, à savoir le coussin d'assise, ce qui nécessite de prévoir un moule supplémentaire et de revêtir ledit coussin. Il en résulte une augmentation sensible du coût de la fabrication du siège pourvu du coussin d'assise.

En outre, dans de tels sièges, se pose le problème de la fiabilité de l'association du coussin d'assise sur le siège. Cette contrainte est très importante dans le cadre de l'application considérée, puisqu'un déchaussement intempestif du coussin, par exemple sous l'effet des forces de freinage, mettrait en péril la sécurité de l'occupant.

L'invention vise à remédier à ces inconvénients, en proposant notamment un ensemble formé d'un siège et d'un revêtement amovible, dont la fabrication nécessite uniquement les moules classiquement prévus pour un siège et dont l'association du revêtement est réalisée de façon sûre, et ce avec une esthétique avantageuse pour ledit ensemble.

Ainsi, le revêtement amovible permet une personnalisation aisée du siège, par exemple directement chez le concessionnaire, et est aisément remplaçable, par exemple en cas d'usure.

A cet effet, et selon un premier aspect, l'invention propose un siège en mousse comprenant une assise et un dossier, au moins une partie de la surface dudit siège comprenant un premier type de zones pourvu d'un premier revêtement et un deuxième type de zones non destiné à être pourvu dudit revêtement. Dans ce siège, une gorge est prévue à la périphérie de chaque zone du deuxième type, ladite gorge étant pourvue de moyens d'association réversible d'un deuxième revêtement destiné à recouvrir de façon amovible la surface de la zone de deuxième type.

Selon un deuxième aspect, l'invention concerne un revêtement amovible destiné à recouvrir une zone de deuxième type d'un tel siège, ledit revêtement étant pourvu de moyens complémentaires d'association dudit revêtement aux moyens prévus dans la gorge de ladite zone.

Selon un troisième aspect, l'invention a pour objet un ensemble comprenant un tel siège et, associé à lui, au moins un tel revêtement.

Selon un quatrième aspect, l'invention propose un procédé de réalisation d'un élément d'un tel siège, comprenant les étapes consistant à :
- former une coiffe en associant le premier revêtement à une couche souple, ladite coiffe formant la surface de l'élément de siège qui est pourvue des premier et deuxième types de zone ;
- fixer les moyens d'association réversible sur ladite coiffe ;
- disposer ladite coiffe dans un moule pourvu de moyens agencés pour former au moins une gorge ;
- injecter un mélange précurseur de mousse à l'intérieur de ladite coiffe ;
- obtenir l'élément de siège par expansion de la mousse.

D'autres objets et avantages de l'invention apparaîtront au cours de la description qui suit, faite en référence aux dessins annexés dans lesquels :
- la figure 1 est une vue schématique en perspective d'un siège selon l'invention, comprenant, à sa surface, un premier type de zones pourvu d'un premier revêtement, et un deuxième type de zones destiné à être pourvu d'un deuxième revêtement ;
- la figure 2 est une vue schématique partielle en coupe transversale d'une gorge prévue à la périphérie d'une zone de deuxième type du siège de la figure 1, ladite gorge étant pourvue de moyens d'association réversible d'un deuxième revêtement, et montre, avant association, le deuxième revêtement pourvu de moyens complémentaires d'association, lesdits moyens d'association étant réalisés selon un premier mode de réalisation ;
- la figure 3 est une vue identique à celle de la figure 2, après association du deuxième revêtement sur le siège ;
- la figure 4 est une vue analogue à celle de la figure 2, les moyens d'association étant réalisés selon un deuxième mode de réalisation ;
- la figure 5 est une vue analogue à celle de la figure 2, les moyens d'association étant réalisés selon un troisième mode de réalisation ;
- la figure 6 est une vue analogue à celle de la figure 2, les moyens d'association étant réalisés selon un quatrième mode de réalisation.

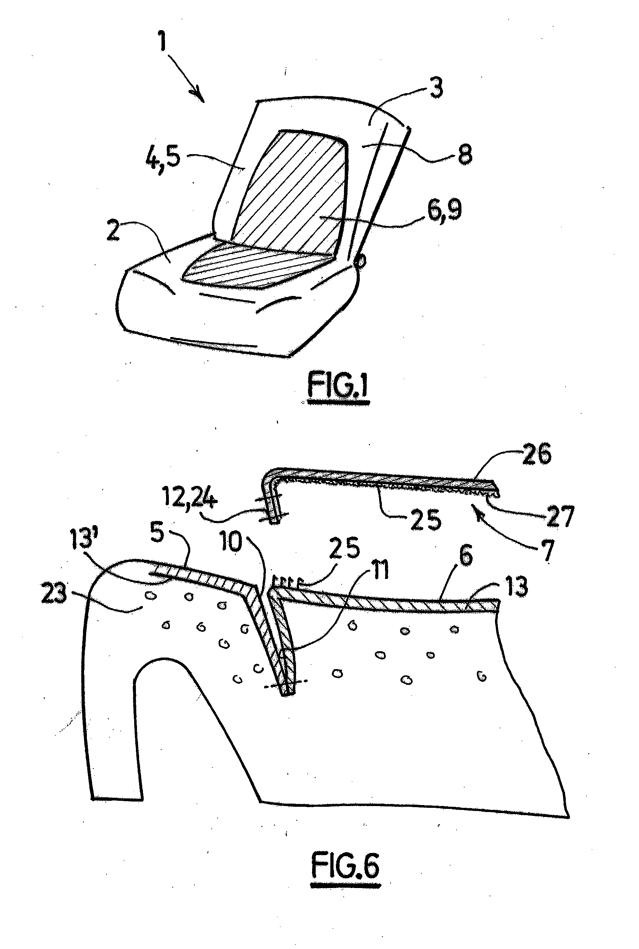

L'invention a pour objet un siège en mousse 1 comprenant une assise 2 et un dossier 3, tel que représenté sur la figure 1. Ce type de siège est notamment destiné aux véhicules automobiles.

La surface du siège 1 comprend un premier type de zones 4 pourvu d'un premier revêtement 5 et un deuxième type de zones 6 non destiné à être pourvu dudit premier revêtement 5.

Les zones 6 de deuxième type sont destinées à recevoir un deuxième revêtement 7 pour recouvrir de façon amovible leur surface.

Dans l'exemple représenté sur la figure 1, les zones du premier type 4 sont localisées sur les côtés 8 du dossier 3 et de l'assise 2, et les zones 6 de deuxième type sont situées en partie centrale 9 du dossier 3 et de l'assise 2.

Dans un exemple particulier, le premier revêtement 5 est réalisé dans un textile ou analogue de faible coût, par exemple uni, et le revêtement amovible 7 est réalisé dans un textile ou analogue présentant une esthétique avantageuse. Cette réalisation permet de limiter le coût de revêtement du siège, tout en remplissant les contraintes esthétique requises dans l'application considérée.

Selon l'invention, il est prévu une gorge 10 à la périphérie de chaque zone 6 de deuxième type, lesdites gorges 10 pouvant être obtenues lors du moulage.

Dans le cas où une zone de deuxième type 6 est prévue en bordure d'un élément du siège, la gorge 10 peut, au niveau de ladite bordure, être formée par la paroi de ladite bordure.

Cette gorge 10 est pourvue de moyens d'association réversible 11 permettant l'association du revêtement amovible 7 sur la surface de la zone 6 de deuxième type.

Selon une réalisation, les moyens d'association réversible 11 sont fixés au premier revêtement 5, de sorte à assurer une association robuste du revêtement amovible 7 sur le siège 1.

En variante, les moyens d'association réversible 11 sont au moins partiellement enrobés dans la mousse, de sorte à être fixés à elle.

Selon une autre réalisation, les moyens d'association réversible 11 sont formés directement dans la gorge 10, par exemple du fait de la forme particulière de ladite gorge.

Les moyens d'association réversible 11 sont agencés pour coopérer avec des moyens complémentaires d'association 12 prévus sur le revêtement amovible 7. Selon une réalisation, ces moyens complémentaires d'association 12 sont associés à la périphérie dudit revêtement amovible 7, par exemple par couture.

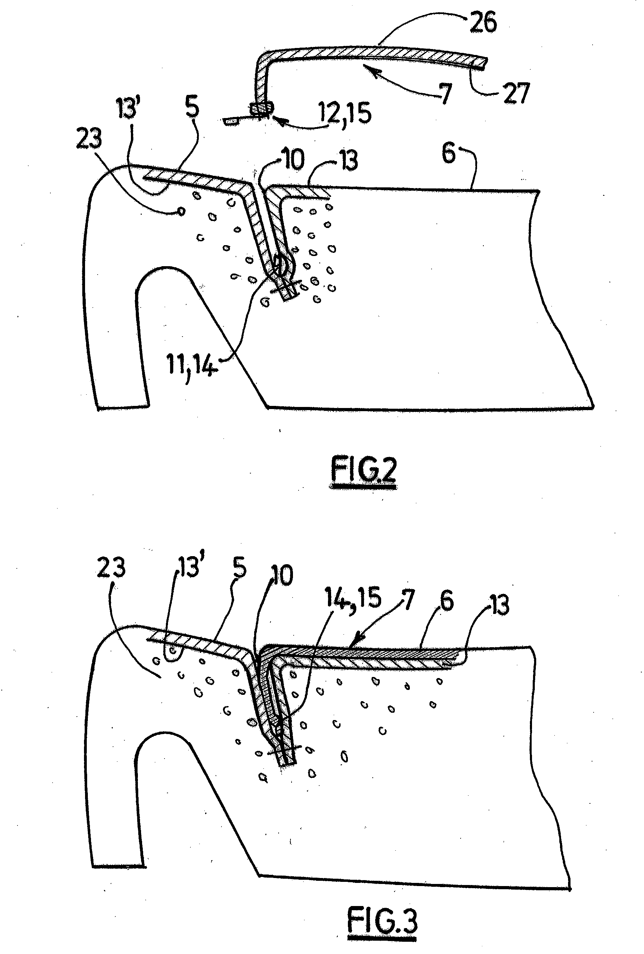

On décrit ci-dessous, en relation avec les figures 2 à 6, quatre modes de réalisation des moyens d'association 11 et 12. Ces figures montrent en coupe une partie de la gorge 10, ladite gorge s'étendant sur toute la périphérie des zones de deuxième type 6 à revêtir. En outre, en relation avec la figure 1, il est prévu deux zones de deuxième type, respectivement sur l'assise 2 et le dossier 3, qui sont destinées à être revêtues de façon analogue chacune par un revêtement amovible 7 dont la dimension est adaptée à celle de la zone à revêtir.

Dans les modes de réalisation représentés sur les figures 1 à 6, une couche souple 13 est prévue sur la zone 6 de deuxième type, et est associée de façon irréversible au premier revêtement 5, à l'intérieur de la gorge 10. Suivant les réalisations des figures 2 à 4, les moyens d'association réversible 11 sont fixés dans la gorge 10 au niveau de l'association du premier revêtement 5 et de la couche souple 13, cette association pouvant être réalisée par couture.

La couche souple 13 est par exemple formée d'une couche de mousse de type BPD, d'épaisseur 3,5 mm, et peut en outre être associée à un support, sur sa face destinée à être en contact avec le revêtement amovible 7.

Ce support est par exemple formé d'une couche de textile de type maille filet. Il est destiné à améliorer le contact du revêtement amovible 7 sur la couche souple 13, une fois l'ensemble siège 1-revêtement amovible 7 formé.

Selon une réalisation, le revêtement amovible 7 comprend, associées l'une sur l'autre, par exemple par collage, flammage ou analogue, une couche de revêtement 26, par exemple en textile, cuir ou analogue, et une couche de mousse 27, la couche de mousse 27 étant prévue sur la face destinée à venir en contact avec la zone 6 de deuxième type. Cette couche de mousse 27, préalablement formée, est par exemple de type BPD, et d'épaisseur 3,5mm.

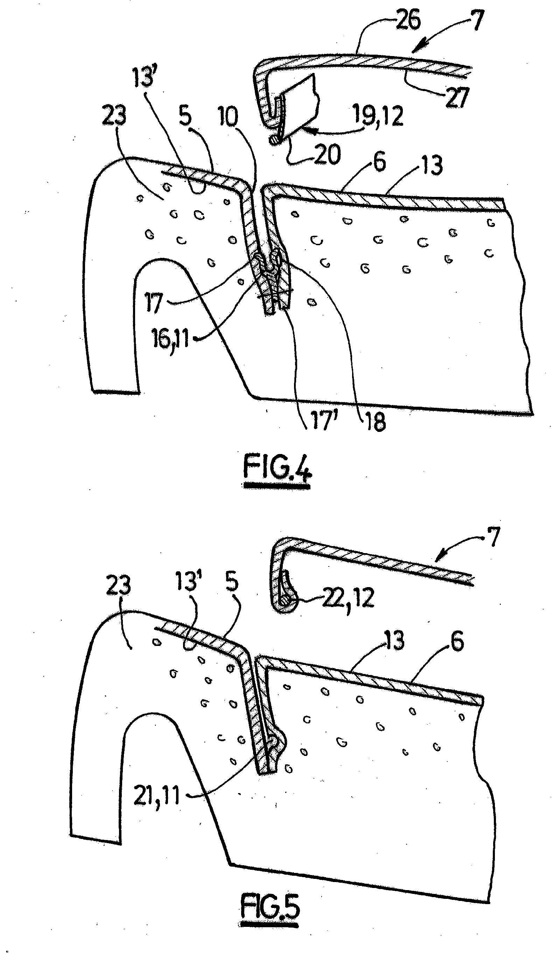

Selon un premier mode de réalisation, représenté sur les figures 2 et 3, les moyens d'association réversible 11 prévus sur la gorge 10 sont formés d'une demi-fermeture à glissière 14 cousue entre le premier revêtement 5 et la couche souple 13, au fond de ladite gorge 10. Cette première fermeture 14 est agencée pour coopérer, par l'intermédiaire d'un curseur, avec la deuxième demi-fermeture à glissière 15 cousue sur la périphérie du revêtement amovible 7.

Selon un deuxième mode de réalisation, représenté sur la figure 4, les moyens d'association réversible 11 prévus sur la gorge 10 sont formés de plots d'ancrage 16, dont la partie supérieure 17 est située dans un logement périphérique 18 de ladite gorge 10, et dont la partie inférieure 17' est cousue, au fond de ladite gorge 10, entre le premier revêtement 5 et la couche souple 13. En variante, les plots d'ancrage 16 peuvent être au moins partiellement enrobés dans la mousse, de sorte à être fixés à elle.

Les moyens complémentaires d'association 12 de ces plots 16 sont formés d'un cadre rigide 19 qui est cousu sur un ourlet formé à la périphérie du revêtement amovible 7, les plots d'ancrage 16 coopérant avec les bords 20 dudit cadre 19.

En relation avec les figures 5 et 6, on décrit deux modes de réalisation dans lesquels les moyens complémentaires d'association 12 sont agencés pour coopérer avec la forme de la gorge 10.

Selon un troisième mode de réalisation, représenté sur la figure 5, les moyens d'association réversible 11 sont formés directement dans la gorge 10 sous la forme d'un logement périphérique 21, et les moyens complémentaires d'association 12 sont formés d'un lacet 22 associé coulissant au revêtement amovible 7 à l'intérieur d'un ourlet formé à la périphérie du revêtement amovible 7. Ainsi, lorsque le lacet 22 est disposé dans la gorge 10, le logement 21 se forme sous l'effet du serrage par coulissement dudit lacet 22, de sorte à permettre une association fiable du revêtement amovible 7 sur la zone 6.

Selon un quatrième mode de réalisation, représenté sur la figure 6, les moyens d'association réversible 11 sont formés directement dans la gorge 10 dont la forme est en contre-dépouille, et les moyens complémentaires d'association sont formés d'un élastique 24 associé à la périphérie du revêtement amovible 7. Ainsi, l'association du revêtement amovible 7 sur la zone 6 est réalisée en insérant l'élastique 24 dans le fond de la gorge 10, la forme en contre-dépouille de ladite gorge 10 permettant de maintenir en position ledit élastique 24, et par conséquent ledit revêtement amovible 7.

En outre, pour améliorer la fiabilité de l'association du revêtement amovible 7 sur la zone 6, des bandes auto-agrippantes 25 peuvent être disposées sur les surfaces respectives de la zone 6 et du revêtement 7 qui sont destinées à venir en regard (voir figure 6).

La forme en contre-dépouille de la gorge 10 peut également être prévue en combinaison avec les autre moyens d'association 11 décrits car elle présente l'avantage de faciliter le montage du revêtement amovible 7, d'éviter la dissociation intempestive de l'ensemble siège 1-revêtement amovible 7, et de cacher les moyens d'association réversible 11 prévus dans ladite gorge 10.

On peut également prévoir, dans la gorge 10, des moyens agencés pour masquer les moyens d'association 11, 12 lorsqu'ils coopèrent, tels que des bourrelets venant boucher au moins partiellement l'ouverture de la gorge 10.

On décrit à présent un procédé de fabrication d'un élément d'un siège 1 selon l'invention, tel que l'assise 2 ou le dossier 3 du siège 1 représenté sur la figure 1. En variante, un siège peut être obtenu par moulage soit d'une seule pièce, soit de plus de deux pièces qui sont associées entre elles par tous moyens appropriés, de sorte à obtenir le siège 1. Le procédé décrit utilise une technique de moussage dite in situ, en variante une autre technique de moussage peut également être envisagée.

Dans une première étape, une coiffe est formée en associant le premier revêtement 5 à la couche souple 13, par exemple par couture. Cette coiffe est destinée à former la surface de l'élément de siège 1, qui sera pourvue des premier et deuxième types de zones 4 et 6. A cet effet, le premier revêtement 5 est pourvu d'un logement dans lequel la couche souple 13 est disposée pour être associée audit revêtement. En outre, les moyens d'association réversible 11 sont disposés au niveau des zones d'association de la couche souple 13 sur le premier revêtement 5, pour être associés à ce niveau et par exemple simultanément avec ces deux éléments.

La coiffe est ensuite disposée dans un moule, ledit moule étant pourvu de moyens agencés pour former au moins une gorge 10 à la périphérie de chaque zone 6 de deuxième type.

Puis un mélange précurseur de mousse, par exemple en polyuréthanne, est injecté à l'intérieur de ladite coiffe, et la pièce finie est obtenue par expansion de la mousse 23.

En variante, le premier revêtement 5 peut comprendre une couche souple 13' disposée sur la face destinée à être en contact avec la mousse 23, de sorte à empêcher l'imprégnation du premier revêtement 5 par la mousse 23 qui conduirait à une rigidification locale dudit revêtement. Cette couche souple peut être formée d'une couche de mousse de type BPD, d'épaisseur 3,5 mm.

## Revendications

1. Siège en mousse (1) comprenant une assise (2) et un dossier (3), au moins une partie de la surface dudit siège (1) comprenant un premier type de zones (4) pourvu d'un premier revêtement (5) et un deuxième type de zones (6) non destiné à être pourvu dudit revêtement (5), ledit siège (1) étant **caractérisé en ce qu'**une gorge (10) est prévue à la périphérie de chaque zone (6) du deuxième type, ladite gorge (10) étant pourvue de moyens d'association réversible (11) d'un deuxième revêtement (7) destiné à recouvrir de façon amovible la surface de la zone (6) de deuxième type.

2. Siège (1) selon la revendication 1, **caractérisé en ce que** les moyens d'association réversible (11) sont fixés au premier revêtement (5).

3. Siège (1) selon la revendication 1, **caractérisé en ce que** les moyens d'association réversible (11) sont formés directement dans la gorge (10).

4. Siège (1) selon l'une quelconque des revendications 1 à 3, **caractérisé en ce qu'**une couche souple (13) est prévue sur chaque zone (6) de deuxième type, ladite couche (13) étant associée de façon irréversible au premier revêtement (5), à l'intérieur de la gorge (10).

5. Siège (1) selon la revendication 4, **caractérisé en ce qu'**un support est associé à la couche souple (13), sur la face destinée à être en contact avec le deuxième revêtement (7).

6. Siège (1) selon la revendication 4 ou 5, **caractérisé en ce que** les moyens d'association réversible (11) sont fixés dans la gorge (10) au niveau de l'association du premier revêtement (5) et de la couche souple (13).

7. Siège (1) selon l'une quelconque des revendications 1 à 6, **caractérisé en ce que** la gorge (10) a une forme en contre-dépouille.

8. Siège (1) selon l'une quelconque des revendications 1 à 7, **caractérisé en ce que** la gorge (10) est pourvue de moyens agencés pour masquer les moyens d'association (11, 12).

9. Revêtement amovible (7) destiné à recouvrir une zone (6) de deuxième type d'un siège (1) selon l'une quelconque des revendications 1 à 8, **caractérisé en ce qu'**il est pourvu de moyens complémentaires d'association (12) dudit revêtement (7) aux moyens (11) prévus dans la gorge (10) de ladite zone (6).

10. Revêtement (7) selon la revendication 9, **caractérisé en ce qu'**il comprend, associées l'une sur l'autre, une couche de revêtement et une couche de mousse, ladite couche de mousse étant prévue sur la face destinée à venir en contact avec la zone de deuxième type (6).

11. Revêtement (7) selon la revendication 9 ou 10, **caractérisé en ce que** les moyens complémentaires d'association (12) sont associés à la périphérie dudit revêtement (7).

12. Ensemble comprenant un siège (1) selon l'une quelconque des revendications 1 à 8 et, associé à lui, au moins un revêtement (7) selon l'une quelconque des revendications 9 à 11.

13. Ensemble selon la revendication 12, **caractérisé en ce que** les moyens d'association réversible (11) sont formés d'une première demi-fermeture à glissière (14), les moyens complémentaires d'association (12) étant formés de la deuxième demi-fermeture à glissière (15) coopérant avec la première.

14. Ensemble selon la revendication 12, **caractérisé en ce que** les moyens d'association réversible (11) sont formés de plots d'ancrage (16), les moyens d'association complémentaires (12) étant formés d'un cadre rigide (19) qui est agencé pour s'ancrer dans lesdits plots (16).

15. Ensemble selon la revendication 12, **caractérisé en ce que** les moyens complémentaires (12) sont agencés pour coopérer avec la forme de la gorge (10).

16. Ensemble selon l'une quelconque des revendications 12 à 15, **caractérisé en ce que** des bandes auto-agrippantes (25) sont disposées sur les surfaces respectives de la zone (6) et du revêtement amovible (7) qui sont destinées à venir en regard.

17. Procédé de réalisation d'un élément d'un siège (1) selon l'une quelconque des revendications 4 à 8, comprenant les étapes consistant à :
- former une coiffe en associant le premier revêtement (5) à la couche souple (13), ladite coiffe formant la surface de l'élément de siège qui est pourvue des premier et deuxième types de zone (4, 6) ;
- fixer les moyens d'association réversible (11) sur ladite coiffe ;
- disposer ladite coiffe dans un moule pourvu de moyens agencés pour former au moins une gorge (10) ;
- injecter un mélange précurseur de mousse à l'intérieur de ladite coiffe ;
- obtenir l'élément de siège par expansion de la mousse (23).

18. Procédé selon la revendication 17, **caractérisé en ce que** le premier revêtement (5) comprend une couche souple (13') disposée sur la face destinée à être en contact avec la mousse (23).
